# EUROPÄISCHE PATENTANMELDUNG

(11) **EP 4 606 557 A2**
(43) Veröffentlichungstag der Anmeldung: **27.08.2025**
(21) Anmeldenummer: 25188046.4
(22) Anmeldetag: 12.02.2021
(51) Int. Cl.: B29C 55/28

(54) **STRECKVORRICHTUNG SOWIE EIN VERFAHREN ZUM VERSTRECKEN EINER KUNSTSTOFFFOLIE IN IHRER TRANSPORTRICHTUNG**

(30) Priorität: 20.03.2020 DE 102020203644; 15.07.2020 DE 102020208857; 23.12.2020 DE 102020134815
(62) Teilanmeldung aus: 21705181.2
(71) Anmelder: Windmöller & Hölscher KG, 49525 Lengerich (DE)
(72) Erfinder: BACKMANN, Martin, 49525 Lengerich (DE); GOLUBSKI, Karsten, 49525 Lengerich (DE); SOLLERT, Manuel, 49525 Lengerich (DE); GROSS, Raphael, 49525 Lengerich (DE)
(74) Vertreter: Laufhütte, Dieter

(57) **Zusammenfassung**

Die Erfindung betrifft eine Streckvorrichtung zum Verstrecken einer Kunststofffolie in ihrer Transportrichtung mit einer ersten Walze, welche mit einem ersten Antrieb antreibbar und mit einer ersten Rotationsgeschwindigkeit rotierbar ist, und mit einer zweiten Walze, welche mit einem zweiten Antrieb antreibbar und mit einer zweiten Rotationsgeschwindigkeit rotierbar ist, wobei die zweite Rotationsgeschwindigkeit größer als die erste Rotationsgeschwindigkeit ist, wobei im Transportweg der Kunststofffolie die zweite Walze stromabwärts der ersten Walze angeordnet ist, wobei mindestens eine der Walzen eine von außen nach innen luftdurchströmbare Walze ist. Erfindungsgemäß ist die mindestens eine luftdurchströmbare Walze kontinuierlich abreinigbar.

## Beschreibung

Die Erfindung betrifft eine Streckvorrichtung sowie ein Verfahren zum Verstrecken einer Kunststofffolie in ihrer Transportrichtung.

Eine solche Streckvorrichtung dient dazu, Eigenschaften einer Kunststofffolie gezielt zu beeinflussen. Durch eine solche Streckung wird insbesondere die Orientierung der in der Kunststofffolie (im Folgenden auch kurz als "Folie" bezeichnet) enthaltenen Moleküle verändert. Um eine Streckung herbei zu führen, umfasst die Streckvorrichtung eine erste Walze, welche mit einem ersten Antrieb antreibbar und mit einer ersten Rotationsgeschwindigkeit rotierbar ist. Weiterhin umfasst die Streckvorrichtung eine zweite Walze, welche mit einem zweiten Antrieb antreibbar und mit einer zweiten Rotationsgeschwindigkeit rotierbar ist. Im Transportweg der Kunststofffolie ist die zweite Walze stromabwärts der ersten Walze angeordnet. Die Streckung der Kunststofffolie erfolgt nun dadurch, dass die zweite Rotationsgeschwindigkeit größer als die erste Rotationsgeschwindigkeit ist.

Bei der Streckung kann es aber auch zu verschiedenen Problemen kommen. So haften an der Kunststofffolie nach der Streckung oft Monomere, die während einer Herstellung der Kunststofffolie ausgasen, oder auch Stäube an, die durch das Strecken in die Folie eingedrückt werden. Auch lässt oft die Wärmeübertragung zwischen Folie und Walze zu wünschen übrig. Weiterhin können sich aber auch Eigenschaften der Folie, insbesondere geometrische Eigenschaften wie das Dickenprofil, in einer Richtung quer zur Transportrichtung der Folie und auch die Planlage der Folie, durch das Strecken verändern.

Gerade die Veränderung des Dickenprofils ist unerwünscht. Diese entsteht beim monoaxialen Verstrecken einer Kunststofffolie in Transportrichtung durch eine Quereinschnürung, welche auch als Neck-in bezeichnet wird, da gleichzeitig die Ränder der Folie verdicken. Diese verdickten Ränder müssen üblicherweise weggeschnitten werden, da sie zu Qualitätseinbußen der Folie führen. Ziel bei der Herstellung von monoaxial versteckten Folien ist es also, das Neck-in und das damit verbundene Verdicken der Folienränder möglichst zu reduzieren. Hierzu sind verschiedene Ansätze für technische Lösungen vorgeschlagen worden.

Ein jüngerer Ansatz zur Lösung des vorgenannten Problems ist aus der DE 20 2020 000221 U1 bekannt geworden. Hier wird vorgeschlagen, dass mindestens eine der Walzen eine von außen nach innen luftdurchströmbare Walze ist. Hierdurch soll erreicht werden, dass die unterhalb der Folienbahn mit eingezogene Luft kontinuierlich über die luftdurchströmbare Walze nach innen in die Walze abströmen kann. In der Regel wird an die Walze eine Unterdruckquelle angeschlossen, sodass durch den Unterdruck die Folienbahn an die Walze angesaugt wird und stärker an dieser haftet. Hierdurch soll das Neck-in und die Verdickung des Folienrandes verhindert oder zumindest reduziert werden, da die Folie über den erzeugten Unterdruck fest an der Walzenoberfläche anliegt. Der Unterdruck soll dabei so eingestellt werden, dass die Haftung der Folienbahn an der Walzenoberfläche durch die erhöhte Reibung verbessert wird und die Relativgeschwindigkeit in Quer- und Längsrichtung zwischen Folie und Walze verhindert wird.

Allerdings ergeben sich bei der DE 20 2020 000221 U1 in der vorgeschlagenen Verfahrensweise aufgrund der Eigenschaften der zu verarbeitenden Folien Probleme, die zum Ausfall der Produktionsanlage führen können. Die Probleme rühren daher, dass die Folie vor dem eigentlichen Recken mit Heizwalzen aufgeheizt werden müssen. Dadurch dünstet die Folie verschiedene chemische Elemente aus, insbesondere Paraffine. Gerade Paraffine können zu Problemen in der äußeren, teilweise porösen Struktur der Walzen führen, die die Funktion der Walzen beeinträchtigen und sogar zu Stillständen führen können. In diesem Fall muss die gesamte Anlage angehalten werden und die Walzen müssen aufwändig gereinigt werden, indem die kondensierten Paraffine aus den Öffnungen in der Walzenoberfläche entfernt werden.

Die Aufgabe der vorliegenden Erfindung ist es daher, eine Streckvorrichtung vorzuschlagen, mit welcher eine Unterbrechung der Folienproduktion durch Stillstand der Streckvorrichtung verhindert werden kann.

Erfindungsgemäß wird diese Aufgabe durch die Kombination der Merkmale des Anspruchs 1 bzw. des Anspruchs 11 gelöst.

Somit wird eine Streckvorrichtung zum Verstrecken einer Kunststofffolie in ihrer Transportrichtung vorgeschlagen mit einer ersten Walze, welche mit einem ersten Antrieb antreibbar und mit einer ersten Rotationsgeschwindigkeit rotierbar ist, und mit einer zweiten Walze, welche mit einem zweiten Antrieb antreibbar und mit einer zweiten Rotationsgeschwindigkeit rotierbar ist, wobei die zweite Rotationsgeschwindigkeit größer als die erste Rotationsgeschwindigkeit ist, wobei im Transportweg der Kunststofffolie die zweite Walze stromabwärts der ersten Walze angeordnet ist, wobei mindestens eine der Walzen eine von außen nach innen luftdurchströmbare Walze ist. Erfindungsgemäß ist die mindestens eine luftdurchströmbare Walze kontinuierlich abreinigbar.

Durch die kontinuierliche Abreinigung der in der luftdurchströmten Walze vorhandenen Öffnungen kann ein Verstopfen dieser Durchgangsöffnungen bzw. Poren mit Paraffin oder anderen von der Folie stammenden Bestandteilen sicher verhindert werden. Hierdurch kann ein kontinuierliches Aufrechterhalten der Luftströmung durch die Walzenoberfläche sichergestellt werden. Damit kann ein Stillstand der Anlage und Produktionsausfall weitgehend verhindert werden.

In den abhängigen Ansprüchen sind vorteilhafte Ausgestaltungen der Erfindung angegeben.

So können Durchgangsöffnungen in dem Walzenmantel der mindestens einen luftdurchströmbaren Walze vorgesehen sein, wobei die Durchgangsöffnungen eine fluidkommunizierende Verbindung zwischen der Außenoberfläche und mindestens einem Hohlraum innerhalb der Walze darstellen. Mit solchen Durchgangsöffnungen ist es ermöglicht, dass zumindest ein Teil der zwischen der Folie und den Flächenelementen der jeweiligen Walze, auf welchen die Folie aufliegt, eingeschlossene Luft in den Hohlraum der Walze abführbar ist. Folglich verbleibt zwischen der Folie und den Flächenelementen eine verringerte Luftmenge, so dass die Folie stärker an den Flächenelementen der Walzenoberflächen haftet und die nicht erwünschten Effekte in verringertem Maße oder gar nicht mehr zeigt.

Die Durchgangsöffnungen in dem Walzenmantel können zumindest jeweils teilweise durch Bohrungen und/oder poröses Material, aus welchem der Walzenmantel zumindest teilweise besteht, gebildet sein.

Die hier vorgesehenen Bohrungen können kleiner als 2 mm, bevorzugt kleiner 1 mm, und insbesondere kleiner als 0,5 mm sein. Die Übergänge von Bohrungen zur Oberfläche des Teils des Walzenmantels können dabei abgerundet oder konisch ausgeformt sein. Mit dieser Maßnahme werden wiederum Beschädigungen der Folie vermieden. Eine Mehrzahl an Bohrungen kann gleichmäßig über den Walzenmantel verteilt sein, wobei pro Flächenelement eine bestimmte Anzahl an Bohrungen vorgesehen sein kann. Die Abstände von jeweils zwei benachbarten Bohrungen können jedoch variiert sein. Vorteilhaft ist es jedoch, wenn die Anzahl der Bohrungen pro Flächenelement oder die Anzahl der Durchgangsöffnungen pro Flächenelement variiert ist, insbesondere in Längsrichtung des Walzenmantels, also in Richtung der Drehachse. Insbesondere an den Rändern des Walzenmantels kann die Anzahl der Bohrungen bzw. der Durchgangsöffnungen pro Flächenelement größer sein als im mittleren Bereich, so dass die Folie an den Rändern stärker an der Walze anhaftet. Die Ränder können dabei jeweils ein Drittel der Walzenmantellänge einnehmen, so dass der mittlere Bereich auch ein Drittel umfasst. Der mittlere Bereich kann jedoch auch größer sein, so dass die Ränder jeweils entsprechend kleiner sind. Durch diese Variation der Anzahl der Bohrungen pro Flächenelement oder der Anzahl der Durchgangsöffnungen pro Flächenelement ist folglich im Allgemeinen der Volumenstrom, der durch die Wandung der Walze durchtritt, variierbar. Eine derartige Variation kann bei Sintermaterialien alternativ oder zusätzlich dadurch erreicht werden, dass die Schichtdicke des Sintermaterials variiert ist, so dass es für den Volumenstrom unterschiedliche Wiederstände gibt.

Durch das alternativ oder zusätzlich vorgesehene poröse Material ist es möglich, eine große Anzahl kleiner Kanäle zu schaffen, welche als Durchgangsöffnungen dienen. Dieses hat den Vorteil, dass die Öffnungen an der Außenoberfläche der Walze klein sind und deren Ränder keine negativen Auswirkungen auf die Folie, beispielsweise in Form von Abdrücken, haben. Somit wird die oben beschriebene Aufgabe gelöst, ohne neue Nachteile in Kauf nehmen zu müssen. Das poröse Material kann dabei ein Bestandteil des Mantels der Walze bilden oder zumindest ein Bestandteil davon sein. Die mittlere Porengröße des porösen Materials kann zwischen 5 und 100, insbesondere zwischen 10 und 60 und bevorzugt zwischen 20 und 45 Mikrometern betragen.

Ein poröses Material kann ein Sintermaterial, insbesondere ein Sintermetall sein. Ein Sintermaterial ist ein Material, welches durch einen Sinterprozess hergestellt wurde. Dabei werden feinkörnige Stoffe, die keramisch oder metallisch sein oder Kunststoff umfassen können, - oft unter erhöhtem Druck - erhitzt, wobei die Temperaturen jedoch unterhalb der Schmelztemperatur der Hauptkomponenten bleiben, so dass die Gestalt des Werkstückes erhalten bleibt. Beispielsweise kann die Gestalt hülsenförmig sein, wobei eine Hülse entsteht, die später auf einen Grundkörper aufgebracht werden kann. Grundkörper und Hülse können dann die Walze bilden. Die Herstellung einer solchen Hülse kann auch in einem additiven Fertigungsverfahren erfolgen, wobei aus einem pulverförmigen Rohstoff durch lokale Erhitzung ein dreidimensionaler Körper erzeugbar ist. Die Körnigkeit des Materials führt dazu, dass zwischen den Körnern Kanäle verbleiben, welche Durchgangsöffnungen bilden. Die Umfangsfläche einer derart hergestellten Walze kann zusätzlich geschliffen und/oder poliert sein, um eine Beschädigung der Folie zu vermeiden. Um jedoch einen unbeabsichtigten Verschluss der Durchgangsöffnungen durch den Abrieb zu vermeiden, kann die Oberfläche der Walze anschließend noch durch ein Ätzverfahren behandelt werden. Die Durchgangsöffnungen sind in der Regel nicht gradlinig ausgestaltet, was jedoch der Fähigkeit, Luft in das Walzeninnere abzuleiten, keinen Abbruch tut. Ein Sintermaterial ist meist ein sehr hartes Material, so dass sich trotz der hohen Zugkräfte innerhalb einer Streckvorrichtung nur eine geringe Durchbiegung ergibt, so dass insbesondere die geometrischen Eigenschaften der Folie kaum beeinflusst werden. Zudem ist die Herstellung eines Sintermaterials in der Regel relativ preisgünstig.

Ein Walzenmantel kann dabei die Walzenoberfläche umfassen, so dass Bohrungen folglich von der Umgebung der Walze bis in das Walzeninnere hineinreichen. Es ist auch möglich, den Walzenmantel mehrschichtig auszubilden. Beispielsweise kann ein innerer Teil eines Walzenmantels vorgesehen sein, welcher Bohrungen umfasst. Ein äußerer Teil des Walzenmantels kann das poröse, insbesondere ein mikroporöses Material umfassen. Auf diese Weise kann vermieden werden, dass sich Ränder einer Bohrung auf der Folie abzeichnen und diese dadurch unbrauchbar wird.

Gemäß einer vorteilhaften Ausführung ist nur ein Teil der luftdurchströmbaren Walze von außen nach innen mit Luft durchströmbar, während ein anderer Teil von innen nach außen mit Luft durchströmbar ist.

Dabei können vorteilhaft einerseits Mittel zur Erzeugung eines Vakuums vorgesehen sein, über die die luftdurchströmbare Walze in dem Bereich, in dem sie von der Folie umschlungen wird, zumindest teilweise von außen nach innen von Luft durchströmbar ist, und dass andererseits Mittel zur Erzeugung eines Überdrucks vorgesehen sind, über die außerhalb des Umschlingungsbereichs der Folie zumindest in Teilbereichen Luft von innen nach außen durch die Durchgangsbohrungen zu deren Reinigung blasbar ist.

Besonders vorteilhaft weist die luftdurchströmbare Walze wenigstens einen Hohlraum in Form einer Kammer auf, welcher in axialer Richtung und/oder in Umfangsrichtung mit zumindest einem Trennelement in zumindest zwei Segmente unterteilt ist, wobei zumindest jeweils ein Segment mit einem gegenüber dem Umgebungsdruck verringertem oder erhöhtem Luftdruck beaufschlagbar ist.

Durch den wenigstens einen Hohlraum mit dem gegenüber dem Umgebungsdruck verringerten Luftdruck wird erreicht, dass ein Teil der Luftmenge, welche dem Hohlraum einer der Walzen zugeführt wird, beispielsweise über Durchgangsöffnungen, aus dem Hohlraum abführbar ist. Somit kann die durch die Bewegung der Folie und der Walze immer wieder neu eingetragene Luft fortwährend abgeführt werden, so dass ein stationärer Zustand bezüglich der verringerten Luftmenge zwischen der Kunststofffolie und Flächenelementen der ersten Walze und/oder der zweiten Walze, auf welchen die Folie aufliegt, einstellbar ist. Eine Möglichkeit zur Beaufschlagung des Hohlraums bietet eine Drehdurchführung über einen Zapfen der jeweiligen Walze. An dieser Drehdurchführung kann ein Schlauch oder ein Rohr angeschlossen sein, welcher oder welches den Innenraum fluidkommunizierend mit einer Unterdruckquelle, insbesondere einer Pumpe, verbindet.

Durch den wenigstens einen Hohlraum mit dem gegenüber dem Umgebungsdruck erhöhtem Druck wird es ermöglicht, Durchgangsöffnungen mittels eines Ausblasvorganges von Verschmutzungen zu befreien.

Zusätzlich oder alternativ kann nach einer weiteren bevorzugten Ausführung der Erfindung eine Saugeinrichtung vorgesehen sein, welche in einem Winkelbereich der ersten und/oder der zweiten Walze angeordnet ist, in dem keine Folie aufliegt, also zwischen der Ablöselinie und der Einlaufkante der Folie. Auf diese Weise ist sogar noch verbessert möglich, Verschmutzungen von der Oberfläche der Walze zu entfernen. Eine solche Saugeinrichtung kann sich zumindest teilweise in Richtung der Walzenachse erstrecken. Auch kann eine solche Saugeinrichtung mehrere voneinander getrennte Saugkammern aufweisen, deren Größen zudem veränderbar sein können, so dass die Saugeinrichtung mit unterschiedlichen Saugleistungen beaufschlagbar ist. In Bereichen in Richtung der Walze, die nicht mit der Folie in Berührung kommen, kann beispielsweise die Saugleistung geringer sein als in den übrigen Bereichen, da hier in der Regel eine geringer Verschmutzung zu befürchten ist.

Die luftdurchströmbare Walze umfasst weiter vorteilhaft wenigstens einen Hohlraum, welcher in axialer Richtung und/oder in Umfangsrichtung mit zumindest einem Trennelement in zumindest zwei Segmente unterteilt ist, wobei zumindest ein Segment mit einem gegenüber dem Umgebungsdruck verringertem oder erhöhtem Luftdruck beaufschlagbar ist. Jedes Segment kann somit mit unterschiedlichen Luftdrücken beaufschlagt werden, so dass beispielsweise in axialer Richtung der Walze die Luftmenge zwischen der Kunststofffolie und Flächenelementen der ersten Walze und/oder der zweiten Walze, auf welchen die Folie aufliegt, unterschiedlich veränderbar ist. Insbesondere sind zwei Trennelemente vorteilhaft, da dann beispielsweise in axialer Richtung gesehen die Randbereiche und der mittlere Bereich mit unterschiedlichen Unterdrücken beaufschlagbar sind. Insbesondere ist es vorgesehen, die Folie in ihren Randbereichen mit höherem Unterdruck zu beaufschlagen als in ihrem Nutzbereich, so dass Beschädigungen der Folie im Nutzbereich vermieden werden. Diese Trennelemente können relativ zu einem Walzenmantel unbeweglich angeordnet sein. Vorteilhaft kann es dabei sein, wenn diese Trennelemente relativ zur Walzenachse verschiebbar angeordnet sind.

Trennelemente können alternativ oder zusätzlich in Umfangsrichtung den inneren Hohlraum einer der genannten Walzen in Segmente unterteilen, also segmentieren. Solche Trennelemente verlaufen folglich parallel zur Längsrichtung der jeweiligen Walze. Insbesondere kann ein Walzenmantel um eine Walzenachse rotierbar gelagert sein, wobei das Trennelement oder die Trennelemente relativ zur Achse unbeweglich angeordnet sein können. Damit ist es beispielsweise möglich, ein Segment unterhalb der Flächenelemente der ersten Walze und/oder der zweiten Walze, auf welchen die Folie aufliegt, anzuordnen. Folglich wird nur im Bereich dieser Flächenelemente ein Unterdruck und/oder ein Überdruck generiert, während in einem anderen Segment im Wesentlichen Umgebungsdruck herrscht. Auf diese Weise wird die Wirksamkeit der Mittel zur Veränderung der Luftmenge erhöht, da keine Umgebungsluft angesaugt, sondern lediglich die Luftmenge an den relevanten Bereichen verändert wird. Zumindest im Bereich der Ablöselinie, deren Bedeutung weiter unten im Zusammenhang mit einer Ablösewalze verdeutlicht wird, kann ein Segment vorgesehen sein, welches mit einem Überdruck beaufschlagbar ist. Damit wird erreicht, dass die Folie sich von der ersten und/oder zweiten Walze entlang einer realen Ablöselinie ablöst, welche nur wenig von der Sollablöselinie abweicht.

Das Segment, in dessen Wirkbereich die Folie nicht aufliegt, wird vorteilhaft mit einem Überdruck beaufschlagt, wobei eine Luftströmung aus dem Inneren der Walze nach außen bewirkbar ist. Damit kann die kontinuierliche Abreinigung der Durchgangsöffnungen bewirkt werden, so dass eine mit der Zeit zunehmende Verschmutzung und Verstopfung der Durchgangsöffnungen vermeidbar ist.

Es können in Umfangsrichtung beispielsweise auch wenigstens drei Trennelemente vorgesehen sein, so dass zumindest drei Segmente vorgesehen sein können. Es ergibt sich beispielsweise eine Anordnungsmöglichkeit, bei der im Auflaufbereich der Folie ein mit einem Unterdruck beaufschlagtes Segment und im Auslaufbereich ein mit einem Überdruck beaufschlagtes Segment angeordnet sind. In allen verbleibenden Bereichen kann ein noch weiter erhöhter Überdruck herrschen. Somit kann im Bereich, in welchem die Folie auf die Oberfläche der Walze trifft (Auflaufbereich), die eingeschleppte Luft abgesaugt werden, wodurch die erfindungsgemäßen Vorteile erzielt werden. Im Bereich, in welchem die Folie die Oberfläche wieder verlässt (Auslaufbereich), kann dagegen mit einem Überdruck die Folie von der Oberfläche der Walze gelöst werden, wodurch vermieden wird, dass sich die Folie über ihre Breite gesehen an unterschiedlichen Umfangswinkeln der Walze löst. Ein Vermeiden dieses Effekts führt zu verbesserten Eigenschaften, insbesondere geometrischen Eigenschaften der Folie. Das Aufprägen des weiter erhöhten Überdrucks in den weiteren Segmenten dient dazu, die Durchgangsöffnungen im Walzenmantel zu reinigen.

Die einzelnen Segmente können hinsichtlich der Größe des Unter- und/oder Überdrucks einzeln ansteuerbar sein. Die Ansteuerung kann durch eine Rechen- und Steuereinheit erfolgen, welche für die Ansteuerung Messdaten von Sensoren mit Solldaten vergleicht. Solche Messdaten können von Messsensoren, mit welchen die Messung der geometrischen Eigenschaften der Folie, insbesondere des Dickenprofils der Folie, durchführbar ist, der Rechen- und Steuereinheit übermittelbar sein. Auf diese Weise kann einer Regelung des Über- und/oder Unterdrucks in einem jeden Segment aufgebaut werden.

Um die Luftmenge zwischen der Kunststofffolie und Flächenelementen der ersten Walze und/oder der zweiten Walze, auf welchen die Folie aufliegt, verändern zu können, ist in einer Ausführungsform der Erfindung wenigstens eine Absaugeinrichtung vorgesehen, mit welcher Luft aus dem Bereich, in dem die Kunststofffolie in Transportrichtung mit der ersten und/oder der zweiten Walze in Kontakt tritt, absaugbar ist. Insbesondere beim Auflaufen der Folie auf die Walze gelangt die durch die Folie mitgeschleppte Luft zwischen die Flächenelemente der Walze und der Folie. Mittels der Absaugeinrichtung kann nun diese Luft gezielt abgesaugt werden, so dass deutlich weniger Luft in den genannten Bereich eingetragen wird.

In einer Weiterbildung ist vorgesehen, dass die Absaugeinrichtung quer zur Transportrichtung der Kunststofffolie in Abschnitte unterteilt ist. Dabei ist es möglich, dass eine sich über die gesamte Breite der Kunststofffolie erstreckende Absaugeinrichtung in Segmente unterteilt ist. Es können aber auch einzelne, voneinander unabhängige Abschnitte vorgesehen sein. Dieser Fall ist insbesondere vorteilhaft, wenn es darum geht, Luft im Bereich der Ränder der Kunststofffolie abzusaugen, um beispielsweise den Einfluss des Streckens auf die geometrischen Eigenschaften der Folie in ihren Randbereich zu minimieren. Sind solche unabhängigen Abschnitte vorgesehen, ist es vorteilhaft, wenn diese in Querrichtung der Folie, also parallel zur Achse der jeweiligen Walze, mittels einer Positioniervorrichtung positionierbar ist, um die Abschnitte der Absaugeinrichtung an unterschiedliche Folienbreiten anpassen zu können.

Die einzelnen Abschnitte können hinsichtlich ihrer Saugleistung einzeln ansteuerbar sein. Die Ansteuerung kann durch eine Rechen- und Steuereinheit erfolgen, welche für die Ansteuerung Messdaten von Sensoren mit Solldaten vergleicht. Solche Messdaten können von Messsensoren, mit welchen die Messung der geometrischen Eigenschaften der Folie, insbesondere des Dickenprofils der Folie, durchführbar ist, der Rechen- und Steuereinheit übermittelbar sein. Auf diese Weise kann eine Regelung der Luftabsaugung aufgebaut werden.

Über eine Überdruckeinrichtung wird der Überdruck erzeugt, mit welcher die der Walze abgewandte Oberfläche der Kunststofffolie mit dem unter Überdruck stehendem Fluid, insbesondere Luft, beaufschlagbar ist. Auf diese Weise wird die Rückseite der Folie, also die Seite, die der Walze abgewandt ist, mit einer Kraft beaufschlagt, die durch die unter Überdruck stehende Luft aufgebracht wird. Damit kann die Folie mit einer größeren Kraft an die Walze angedrückt werden, so dass ein geringerer Anteil der Luft in den Bereich zwischen Folie und Walze gelangen kann. Weiter kann ein hinreichend hoher Überdruck gebildet werden, um das Reinigen der Durchgangsöffnungen zu erreichen. Wie auch die zuvor beschriebene Absaugeinrichtung kann die Überdruckeinrichtung in Abschnitte unterteilt sein, welche zusätzlich in Richtung der Walzenachse positionsveränderbar sein können. Auch kann eine Steuerung und/oder Regelung des Überdrucks und/oder des Volumenstroms vorgesehen sein. Auch dies kann insbesondere abschnittsweise individuell geschehen.

Wenn insbesondere das als Überdruckeinrichtung ausgestaltete Mittel zur Veränderung der Luftmenge in den Randbereichen der Walze angeordnet sind, kann vorgesehen sein, dass das Fluid, mit welchem die Randbereiche der Walze, auf welchen insbesondere die Randbereiche der Folie aufliegen, mit einem kalten Fluid beaufschlagt wird. Mit "kaltem Fluid" ist ein Fluid gemeint, welches eine Temperatur unterhalb von 50 Grad Celsius, bevorzugt unterhalb 30 Grad Celsius, vorzugsweise unterhalb von 15 Grad. Vorteilhaft ist dabei, dass die Randbereiche der Folie vor dem Auflaufen auf die betreffende Walze eine höhere Steifigkeit als der Nutzbereich der Folie aufweisen, so dass die Randbereiche nicht mehr so stark nach innen wandern. Mit anderen Worten wird damit das Neck-in reduziert.

Gemäß einer weiteren bevorzugten Ausgestaltung der Erfindung sind Heizmittel vorgesehen, über die zumindest ein Teil der durch die Durchgangsöffnungen der luftdurchströmbaren Walze hindurchströmende Luft auf eine soweit erhöhte Temperatur erhitzbar ist, dass in den Durchgangsöffnungen angesetzte Kunststoffreste, beispielsweise Paraffine, aufgeschmolzen und dadurch leichter ausgeblasen und/oder abgesaugt werden können.

Die Heizmittel können aus einer Temperiervorrichtung bestehen. Eine solche Temperiervorrichtung kann insbesondere in der luftdurchströmbaren Walze integriert sein. So kann der Walzenkörper beispielsweise mit wenigstens einer Rohrleitung durchzogen sein, durch welche ein temperiertes Fluid leitbar ist. Eine solche Rohrleitung kann sich dabei in axialer Richtung der Walze erstrecken, um eine schnelle Fluidverteilung zu gewährleisten. Diese Rohrleitung kann beispielsweise als Bohrung im Walzenmantel ausgeführt sein. Der Verlauf der Rohrleitung kann jedoch auch einen anderen Verlauf haben, etwa wendelförmig, um einen größeren Wärmeübertrag generieren zu können. In diesem Fall können kann die Rohrleitung durch ein Rohr oder einen Schlauch gebildet werden, der bei einem hohlen Walzenmantel innerhalb dieses Walzenmantels angeordnet ist. Sollte der Walzenmantel mehrschichtig ausgebildet sein, so kann die Rohrleitung auch zwischen zwei Schichten angeordnet sein. Es sind auch mehrere Rohrleitungen denkbar, um unterschiedliche Zonen der Walze mit unterschiedlichen Temperaturen beaufschlagen zu können. Die Zuführung des temperierten Fluids in die Walze erfolgt vorzugsweise durch eine oder mehrere stirnseitige Drehdurchführungen.

Insbesondere bei der Ausgestaltung der Walze in Kombination mit Sintermaterialien ist es möglich, den Walzenmantel in zumindest zwei Schichten auszugestalten. Eine innere Schicht kann dabei im Vergleich zur Außenschicht gröbere Poren umfassen, so dass durch diese Poren das Fluid leitbar ist. Die Außenschicht kann dabei erfindungsgemäß die Luftmenge zwischen Folie und Walze durch Ableitung von Luft verringern.

In einer weiteren Variante der Erfindung kann die erste und/oder die zweite Walze wenigstens einen Heizdraht umfassen, welcher in einer Oberflächenschicht der Walze eingebettet ist. Diese Einbettung ist insbesondere in Kombination mit einer Ausgestaltung dieser Oberflächenschicht aus einem Sintermaterial erzeugbar.

Eine Temperiervorrichtung kann in einer vorteilhaften Ausführung der Erfindung als Induktionseinrichtung ausgestaltet sein. Insbesondere kann eine Einrichtung zur Bereitstellung eines Magnetfeldes, welche einen Teil der Induktionseinrichtung darstellt, innerhalb der Walze angeordnet sein, um die Effizienz dieser Temperiervorrichtung zu erhöhen. Jedoch ist, um einen einfacheren Aufbau zu gewährleisten, auch eine Anordnung außerhalb der Walze denkbar.

Auch alternative oder zusätzliche Temperiervorrichtungen sind denkbar, die auf weiteren physikalischen Prinzipien basieren. So kann beispielsweise auf Veränderung der Temperatur der Folie durch eine Vorrichtung zur Erzeugung von Infrarotstrahlung erfolgen. Diese ist vorzugsweise außerhalb einer der Walzen angeordnet. Auch ein temperiertes Gas, welches aus wenigstens einer Düse direkt auf die Folie leitbar ist, kann zur Temperierung vorgesehen sein. Als Gas ist insbesondere Luft vorgesehen. Vorrichtung zur Erzeugung von Infrarotstrahlung und/oder eine Düse können auch innerhalb der Walze angeordnet sein.

Eine weitere bevorzugte Weiterbildung der Erfindung sieht vor, dass in der luftdurchströmbaren Walze mindestens eine segmentierte Kammer angeordnet ist, über die in dieser aufgenommenes Lösungsmittel durch die Durchgangsöffnungen zu deren Reinigung drückbar ist. Hierdurch werden die in den Öffnungen festsitzenden Verunreinigungen, beispielsweise die Paraffine, herausgelöst und ausgespült.

Eine alternative Ausführungsform sieht vor, dass außen in dem Bereich der Oberfläche der luftdurchströmbaren Walze, der nicht von der Folie umschlungen ist, wenigstens ein Brenner zum Wegbrennen von Kunststoffresten oder Mittel zur Erzeugung eines Ionenstrahls oder Mittel zur Erzeugung einer Corona zur Beseitigung der Kunststoffreste angeordnet sind. Auch durch diese Mittel können die Durchgangsöffnungen gereinigt werden. Sie können gegebenenfalls zusätzlich zu dem angelegten Überdruck vorgesehen werden.

Alternativ oder ergänzend kann auch außen in dem Bereich der Oberfläche der luftdurchströmbaren Walze, der nicht von der Folie umschlungen ist, wenigstens eine Rakel zum Abrakeln fester Stoffe von der Oberfläche angeordnet ist.

Die oben genannte Aufgabe wird zusätzlich gelöst durch ein Verfahren zum Verstrecken einer Kunststofffolie in ihrer Transportrichtung mit einer ersten Walze, welche mit einem ersten Antrieb angetrieben und mit einer ersten Rotationsgeschwindigkeit rotiert wird, und mit einer zweiten Walze, welche mit einem zweiten Antrieb angetrieben und mit einer zweiten Rotationsgeschwindigkeit rotiert wird, wobei die zweite Rotationsgeschwindigkeit größer als die erste Rotationsgeschwindigkeit ist, wobei im Transportweg der Kunststofffolie die zweite Walze stromabwärts der ersten Walze angeordnet ist, wobei mindestens eine der Walzen von außen nach innen mit Luft durchströmt wird, und wobei diese mindestens eine luftdurchströmbare Walze kontinuierlich abgereinigt wird.

Mit diesem erfindungsgemäßen Verfahren lassen sich die gleichen Vorteile erzielen, wie sie bereits im Zusammenhang mit einer erfindungsgemäßen Vorrichtung beschrieben worden sind.

In einem weiteren Aspekt der Erfindung ist eine Blasfolienanlage vorgesehen mit zumindest einem Extruder zur Erzeugung einer Kunststoffschmelze, einem Düsenkopf zur Erzeugung eines Folienschlauches aus der Kunststoffschmelze, einer Flachlegeeinrichtung zur Umwandlung des Folienschlauches in eine doppellagige Kunststofffolie, einer angetriebenen Abzugsvorrichtung zum Abziehen und Weitertransport der doppellagigen Kunststofffolie und einer Wickeleinrichtung zum Aufwickeln zumindest einer Lage der doppellagigen Kunststofffolie, wobei eine Streckvorrichtung vorgesehen ist, welche nach einem der Ansprüche 1 bis 11 und/oder gemäß der obigen Beschreibung ausgestaltet ist.

Eine solche Blasfolienanlage kann optional eine Kalibriervorrichtung, welche in Transportrichtung der Flachlegeeinrichtung vorgeordnet ist, umfassen. Weiterhin kann eine Reversiervorrichtung vorgesehen sein, welche der Abzugsvorrichtung nachgeordnet ist und mit welcher Fehler, insbesondere Abweichungen von der mittleren Foliendicke, quer über die Folienbreite verlegbar sind. Eine erfindungsgemäße Streckvorrichtung kann nun stromabwärts der Abzugsvorrichtung angeordnet sein, beispielsweise zwischen der Abzugsvorrichtung und einer optionalen Reversiervorrichtung. Auch ist eine Anordnung der Streckvorrichtung zwischen einer Reversiervorrichtung und der Wickelvorrichtung denkbar. Die Kunststofffolie kann der Streckvorrichtung als flachgelegter Folienschlauch oder als einseitig oder zweiseitig geschnittene, doppellagige Kunststofffolie zugeführt werden. Eine einseitig geschnittene Kunststofffolie kann zuvor aufgeklappt worden sein und der Streckvorrichtung als einlagige Kunststofffolie zugeführt werden, welche insbesondere doppeltbreit ist. Eine zweiseitig geschnittene Kunststofffolie kann in ihre einzelnen Lagen separiert werden, wobei die Lagen jeweils einer einzelnen Streckvorrichtung zuführbar sind. Eine Wickeleinrichtung kann eine Wickelstelle zum Aufwickeln einer ungeschnittenen, einseitig geschnittenen oder beidseitig geschnittenen doppellagigen Kunststofffolie umfassen. Auch eine einseitig geschnittene, einlagige - also aufgeklappte - Kunststofffolie kann aufgewickelt werden. Es können aber auch zwei Wickelstellen vorgesehen sein zum Aufwickeln jeweils einer Lage der zuvor doppellagigen Kunststofffolie.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Streckvorrichtung und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Schematische Ansicht einer erfindungsgemäßen Streckeinrichtung
- Fig. 2: Eine Streckwalze einer Ausführungsform der Erfindung
- Fig. 3: Eine Streckwalze einer weiteren Ausführungsform der Erfindung
- Fig. 4: Eine Streckwalze einer weiteren Ausführungsform der Erfindung
- Fig. 5: Eine Ausführungsform der Erfindung mit einer Saugeinrichtung
- Fig. 6: Eine Ausführungsform der Erfindung mit einer Elektrode
- Fig. 7: Eine erfindungsgemäße Blasfolienanlage mit einer Streckeinrichtung
- Fig. 8: Eine weitere erfindungsgemäße Blasfolienanlage mit einer Streckeinrichtung
- Fig. 9: Eine Ausführungsform der Erfindung mit einer Düse

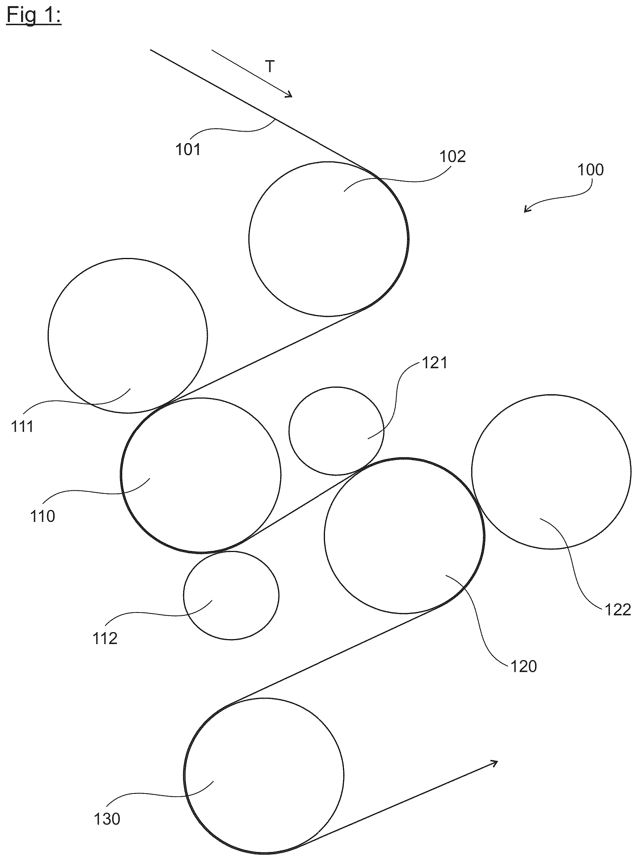

Die **Figur 1** zeigt eine schematische Darstellung einer erfindungsgemäßen Streckvorrichtung. Die Mittel zur Veränderung der Luftmenge zwischen der Kunststofffolie und Flächenelementen der ersten Walze und/oder der zweiten Walze, auf welchen die Folie aufliegt, sind in dieser Figur nicht zu erkennen und werden anhand der nachfolgenden Figuren näher erläutert. Die bahnförmige Kunststofffolie 101 läuft in Transportrichtung T in die Streckvorrichtung 100 ein. Die Kunststofffolie läuft zunächst auf eine oder nacheinander auf mehrere Vorheizwalzen auf, von welchen nur eine Vorheizwalze 102 gezeigt ist. Eine Vorheizwalze hat die Aufgabe, die Folie auf eine vordefinierte Temperatur zu bringen. Dazu ist eine Vorheizwalze in der Regel temperiert, wobei oft ein temperiertes Fluid in die Vorheizwalze eingebracht wird.

Nach dem Verlassen der Vorheizwalze(n) 102 gelangt die Folienbahn 101 auf eine erste Walze 110, welche generell auch als erste Streckwalze 110 bezeichnet werden kann. Diese Streckwalze ist mit einem nicht dargestellten Antrieb verbunden, beispielsweise einem eigenen Elektromotor, welcher die Walze 110 mit einer ersten Rotationsgeschwindigkeit rotierend antreibt.

Der ersten Walze 110 ist vorzugsweise einer erste Anlegewalze 111 zugeordnet, welche zusammen mit der ersten Walze 110 einen Einlaufspalt für die Folie zur Verfügung stellt. Vorzugsweise ist der Einlaufspalt oder der Laufweg der Folie 101 derart eingerichtet, dass diese 101 in dem Einlaufspalt tangential zu den Walzen 110, 111 läuft. Der Walzenspalt dient bereits dazu, die Luft zwischen der Streckwalze 110 und der Folie zu minimieren.

Der ersten Walze 110 ist darüber hinaus noch eine zweite Anlegewalze 112 zugeordnet, welche einen Auslaufspalt mit der Walze 110 bildet. Die zweite Anlegewalze 112 kann in Umfangsrichtung der ersten Walze 110 verstellbar sein. Die zweite Anlegewalze 112 dient dazu, dass die Folie die ersten Walze 110 entlang einer Linie, die parallel zur axialen Richtung der Walze 110 verläuft, verlässt.

In Transportrichtung T der Folie 101 gesehen ist stromabwärts eine zweite Walze 120 angeordnet, welche als zweite Streckwalze 120 bezeichnet werden kann. Auch diese Streckwalze 120 ist mit einem nicht dargestellten, weiteren Antrieb verbunden, beispielsweise einem eigenen Elektromotor, welcher die Walze 120 mit einer zweiten Rotationsgeschwindigkeit rotierend antreibt. Die zweite Rotationsgeschwindigkeit ist dabei größer als die erste Rotationsgeschwindigkeit, wobei dann die zweite Streckwalze eine größere Umfangsgeschwindigkeit hat als die erste Streckwalze. Dies führt dazu, dass die Folie 101 zwischen dem Auslaufspalt der ersten Walze 110 und der Einlaufkante der zweiten Walze 120 im Verhältnis der Umfangsgeschwindigkeiten in ihrer Transportrichtung gestreckt wird. Die Strecke zwischen dem Auslaufspalt und der Einlaufkante wird oft auch als Streckspalt bezeichnet.

Möglich ist es, dass die erste Walze 110 und die zweite Walze 120 relativ zueinander bewegbar sind. Damit kann auf den Streckspalt Einfluss genommen werden. Eine Veränderung des Streckspalts kann die Eigenschaften der Folie beeinflussen.

Der zweiten Walze 120 ist vorzugsweise eine dritte Anlegewalze 121 zugeordnet, welche zusammen mit der ersten Walze 120 einen zweiten Einlaufspalt für die Folie zur Verfügung stellt. Vorzugsweise ist der Einlaufspalt oder der Laufweg der Folie 101 derart eingerichtet, dass diese 101 in dem Einlaufspalt tangential zu den Walzen 120, 121 läuft. Der Walzenspalt dient bereits dazu, die Luft zwischen der Streckwalze 120 und der Folie zu minimieren.

In dem Fall, dass der Streckspalt klein ist, würde die dritte Anlegewalze 121 mit der Walze 110 kollidieren, so dass in diesem Fall die dritte Anlegewalze abgeschwenkt werden müsste.

Der zweiten Walze 120 ist darüber hinaus optional eine vierte Anlegewalze 122 zugeordnet, welche einen Auslaufspalt mit der Walze 120 bildet. Die zweite Anlegewalze 122 kann ebenfalls in Umfangsrichtung der ersten Walze 120 verstellbar sein. Die zweite Anlegewalze 122 dient dazu, dass die Folie die ersten Walze 120 entlang einer Linie, die parallel zur axialen Richtung der Walze 120 verläuft, verlässt.

Grundsätzlich kann in einer erfindungsgemäßen Streckvorrichtung auch auf eine oder mehrere Anlegewalzen verzichtet werden. Dennoch kann die Rede von einem Einlaufspalt oder Auslaufspalt sein. Darunter ist dann die Linie zu verstehen, entlang welcher sich die Folie an die Streckwalze anlegt bzw. an welcher sich die Folie von der Streckwalze löst.

Es können noch weitere Streckwalzen, insbesondere mit jeweils ein oder zwei Anlegewalzen, vorgesehen sein, wobei jeweils zwei unmittelbar nacheinander angeordnete Streckwalzen derart angetrieben sind, dass die jeweils stromabwärts angeordnete Streckwalze eine höhere Umfangsgeschwindigkeit aufweist als die vorhergehende Streckwalze.

Stromabwärts der Streckwalzen 110, 120 ist eine Abkühlwalze 130 angeordnet, mit welcher die Folie 101 wieder abkühlbar ist, so dass sich die durch das Strecken erfolgte neue Molekülorientierung innerhalb der Folie verfestigt.

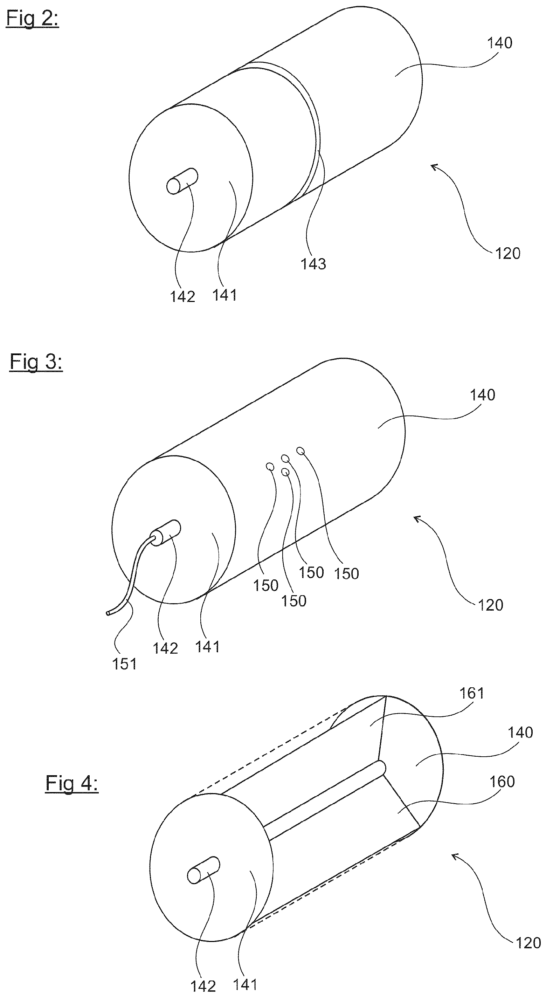

Anhand der **Figur 2** wird im Folgenden eine Ausführungsform der erfindungsgemäßen Streckeinrichtung erläutert. Hierzu ist eine perspektivische Ansicht einer Streckwalze gezeigt. Im gezeigten Beispiel ist es die Streckwalze 120. Diese umfasst einen Walzenmantel 140 sowie Stirnflächen, von denen die Stirnfläche 141 sichtbar ist. Die Streckwalze weist insbesondere eine Welle, eine Achse oder Achsstummel auf. Von den vorgenannten Bauelementen ist nur der aus der Stirnfläche 141 hinausragende Teil 142 sichtbar. Der Walzenmantel 140 umfasst nun Vertiefungen 143, die im vorliegenden Beispiel als umlaufende Nut dargestellt ist. Weitere Beispiele für Vertiefungen sind bereits weiter oben in der Erfindungsbeschreibung angegeben worden. Die Eigenschaft von Vertiefungen ist, dass sie lediglich in den Walzenmantel hineinragen, jedoch nicht durch den Walzenmantel 140 hindurch bis in den vom Walzenmantel und den Stirnflächen definierten Innenraum der Walze reichen.

Die **Figur 3** ähnelt der Figur 2, jedoch umfasst hier die Walze 120 Durchgangsöffnungen 150. Die genaue Ausgestaltung der Durchgangsöffnungen wurde bereits weiter oben beschrieben. Die Durchgangsöffnungen reichen bis in den Innenraum der Walze hinein und bilden somit eine fluidkommunizierende Verbindung zwischen dem Innenraum und der Umgebung der Walze 120.

Der Innenraum der Walze 120 kann optional mit einem Unterdruck beaufschlagbar sein. Dazu kann die Achse, die Welle oder Achsstummel mit Fluidleitungen versehen sein. Im Falle einer Welle umfassen Fluidleitungen eine Drehdurchführung. Die Fluidleitung der Achse, Welle oder Achsstummel sind mit einer weiteren Fluidleitung wie etwa einem Schlauch 151 verbunden, welche zu einer Unterdruckquelle führt.

Die **Figur 4** zeigt weitere mögliche Merkmale einer Walze 120, welche Durchgangsöffnungen aufweist. Hier kann der Innenraum, der nun aufgrund der fehlenden Darstellung des Walzenmantels sichtbar ist, mit Trennwänden, im vorliegenden Beispiel zwei Trennwände 160, 161, in mehrere Einzelräume unterteilt sein. Damit ist es möglich, die verschiedenen Einzelräume mit verschiedenen Luftdrücken zu beaufschlagen. Im vorliegenden Fall mit zwei Einzelräumen kann einer von ihnen beispielsweise mit einem Unterdruck beaufschlagt werden, während im zweiten Einzelraum kein Über- oder Unterdruck angelegt sein kann, so dass hier der Umgebungsdruck herrscht.

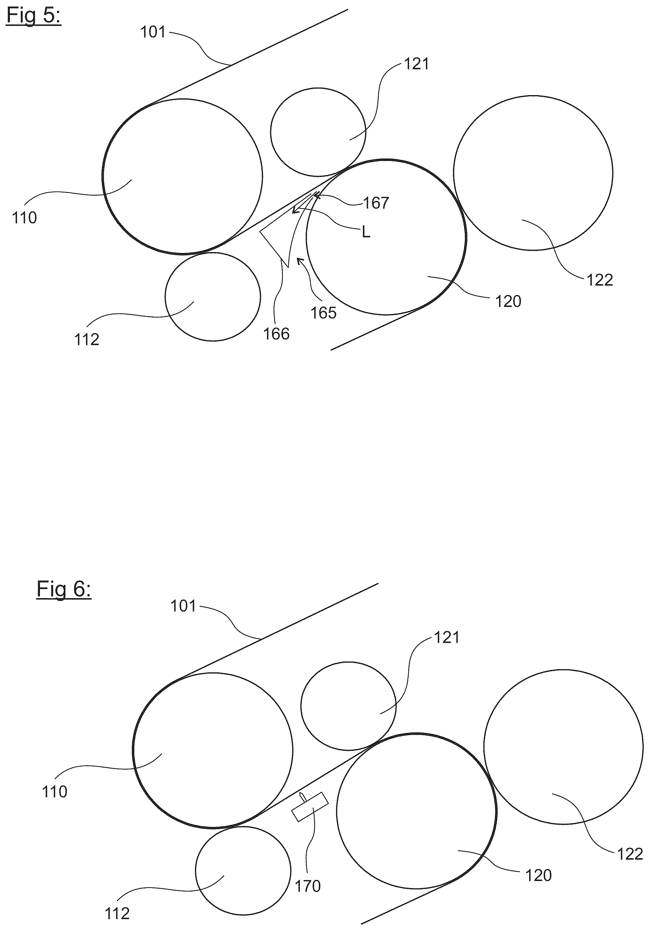

Aus der **Figur 5** ist ein Ausführungsbeispiel erkennbar, bei dem stromaufwärts der Streckwalze, hier insbesondere die Streckwalze 120, eine Saugeinrichtung 165, welche sich in Querrichtung in Bezug auf die Transportrichtung der Folie 101 erstreckt, angeordnet ist. Diese Saugeinrichtung umfasst einen geschlossenen Kasten 166 mit einer oder mehreren Saugöffnungen 167. Der Kasten ist insbesondere mit einem Unterdruck beaufschlagbar, so dass durch die Saugöffnungen Luft aus dem Einlaufspalt in Richtung des Pfeils L in die Saugeinrichtung gelangt und abgeführt wird.

Die **Figur 6** zeigt ein weiteres Ausführungsbeispiel einer erfindungsgemäßen Streckeinrichtung, bei der dem Einlaufspalt einer Streckwalze, in dem gezeigten Ausführungsbeispiel die Streckwalze 120, eine Elektrode 170 vorgeordnet ist. Diese Elektrode ist mit einem elektrischen Potential beaufschlagbar, welches sich insbesondere von dem elektrischen Potential der Folie 101 unterscheidet. Damit wird eine elektrische Aufladung der Folie erreicht, welche dazu führt, dass die Folie zusätzlich mit einer elektrischen Kraft auf der Streckwalze gehalten wird.

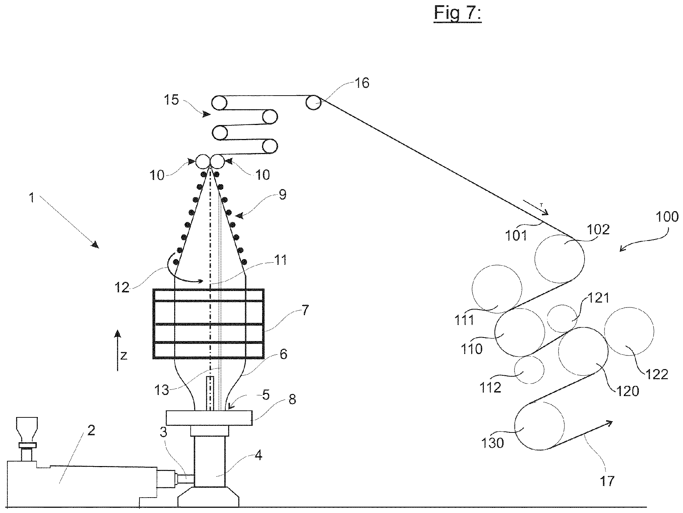

Die **Figur 7** zeigt eine Vorrichtung 1 zur Herstellung eines Folienschlauches, nämlich eine Blasfolienanlage, die zunächst wenigstens einen Extruder 2 umfasst, mit welcher beispielsweise in Granulatform vorliegender Kunststoff plastifizierbar ist. Über eine Leitung 3 wird die so erzeugte Kunststoffschmelze einem Extrusionswerkzeug 4, der auch als Düsenkopf bezeichnet werden kann, zugeführt, von dem diese Schmelze in einen Folienschlauch 6 überführt wird, so dass dieser Schmelzestrom aus einem in dieser Figur nicht sichtbaren Ringspalt 5 in Abzugsrichtung z herausziehbar ist. Nun liegt ein noch nicht verfestigter Folienschlauch 6 vor. Dieser wird von innen her durch einen leichten Überdruck aufgeblasen, so dass er innerhalb der optionalen Kalibriervorrichtung 7 einen größeren Durchmesser aufweist. Eine Verfestigung des Folienschlauches erfolgt insbesondere durch eine Temperiervorrichtung 8, die oft auch wegen ihrer ringartigen, den Folienschlauch einfassenden Ausgestaltung als Kühlring bezeichnet wird.

Nach dem Passieren der Kalibriervorrichtung gelangt der Folienschlauch 6 in den Wirkbereich einer Flachlegevorrichtung 9, in der der kreisrunde Folienschlauch in einen ellipsenförmigen Querschnitt mit einer zunehmenden Exzentrizität überführt wird, bis er schließlich im Einflussbereich der Abzugswalzen 10 eine doppellagige Kunststofffolie, die an ihren Seiten miteinander verbunden sind, bildet.

Die Flachlegeeinrichtung ist drehbar angeordnet, wobei die Drehachse im Wesentlichen mit der Schlauchachse 11, die in der Figur 1 durch eine strichpunktierte Linie angedeutet ist, fluchtet. Die Drehbarkeit der Flachlegeeinrichtung ist mit dem Pfeil 12 angedeutet.

Die Figur 7 zeigt weiterhin eine Reversiereinrichtung 15, welche die Aufgabe hat, den flachgelegten Folienschlauch von der Flachlegevorrichtung zur ortfesten Walze 16 zu führen, ohne dass Beschädigungen auftreten.

Stromabwärts der Reversiervorrichtung 15 ist nun eine erfindungsgemäße Streckvorrichtung 100 angeordnet, welche bereits im Zusammenhang mit den Figuren 1 bis 6 und der weitergehenden Beschreibung erläutert worden ist. Die in der Figur 7 dargestellte Streckvorrichtung entspricht derjenigen, die in der Figur 1 gezeigt ist. Es ist noch darauf hinzuweisen, dass stromaufwärts der Streckeinrichtung 100 noch eine Schneideeinrichtung positioniert sein kann, mit welcher eine oder zwei Ränder der Falz auf- oder abgeschnitten werden können. Zusätzlich kann eine Trennvorrichtung vorgesehen sein, mit welcher die doppellagige Kunststofffolie in eine oder mehrere einlagige Folien aufgeteilt werden kann.

Der Pfeil 17 deutet an, dass dieser Folienschlauch nach dem Durchlauf durch die Streckvorrichtung 100 zur Weiterverarbeitung geführt wird, welche hier nicht näher spezifiziert ist.

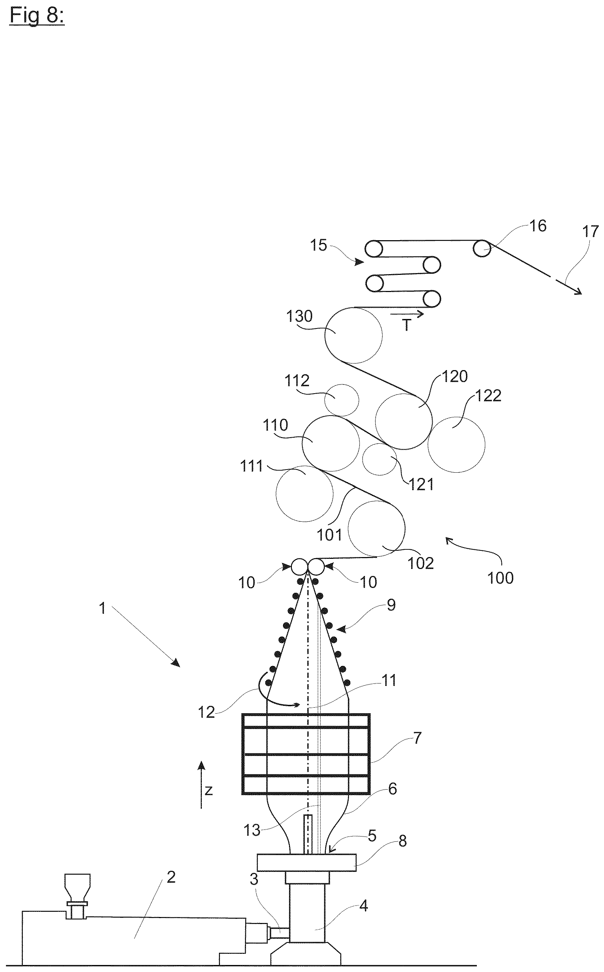

Die **Figur 8** zeigt eine weitere Ausführungsform einer erfindungsgemäßen Blasfolienanlage, bei der nun die Streckeinrichtung 100 zwischen den Abzugswalzen 10 und der Reversiervorrichtung 15 angeordnet ist. Dabei ist zu beachten, dass die Walzen innerhalb der Streckvorrichtung nun so in einer Reihenfolge angeordnet sind, dass die Kunststofffolie von unten nach oben transportiert werden kann.

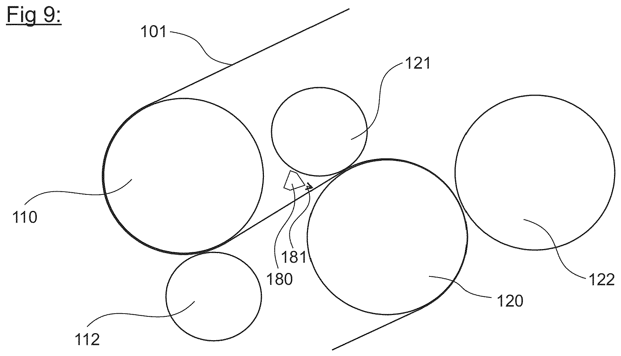

Die **Figur 9** zeigt ein weiteres Ausführungsbeispiel einer erfindungsgemäßen Streckeinrichtung, bei der dem Einlaufspalt einer Streckwalze, in dem gezeigten Ausführungsbeispiel die Streckwalze 120, wenigstens eine Düse 180 vorgeordnet ist. Durch diese Düse ist die Folie auf der der Walze abgewandten Seite mit einem unter Druck stehendem Fluid 181, insbesondere Druckluft, beaufschlagbar. Damit wird erreicht, dass die Folie mit einer Kraft gegen die Walze 120 gedrückt wird, so dass weniger Luft durch die Bewegung der Folie in den Bereich zwischen der Folie und der Walze 120 eingezogen wird.

| **Bezugszeichenliste** | |
|---|---|
| 100 | Streckvorrichtung |
| 101 | Kunststofffolie |
| 102 | Vorheizwalze |
| 110 | Erste Walze |
| 111 | Erste Anlegewalze |
| 112 | Zweite Anlegewalze |
| 120 | Erste Streckwalze |
| 121 | Dritte Anlegewalze |
| 122 | Zweite Anlegewalze |
| 130 | Abkühlwalze |
| 140 | Walzenmantel |
| 141 | Stirnfläche |
| 142 | Aus der Stirnfläche 141 herausragende Teil |
| 143 | Vertiefungen |
| 150 | Durchgangsöffnung |
| 151 | Schlauch |
| 160 | Trennwand |
| 161 | Trennwand |
| 165 | Saugeinrichtung |
| 166 | Geschlossener Kasten |
| 170 | Elektrode |
| 1 | Vorrichtung zur Herstellung eines Folienschlauches |
| 2 | Extruder |
| 3 | Leitung |
| 4 | Extrusionswerkzeug |
| 5 | Nicht sichtbarer Ringspalt |
| 6 | Noch nicht verfestigter Folienschlauch |
| 7 | Optionale Kalibriervorrichtung |
| 8 | Temperiervorrichtung |
| 9 | Flachlegevorrichtung |
| 10 | Abzugswalzen |
| 11 | Schlauchachse |
| 12 | Pfeil zur Verdeutlichung der Drehbarkeit der Flachlegeeinrichtung |
| 13 | |
| 14 | |
| 15 | Reversiereinrichtung |
| 16 | Ortsfeste Walze |
| 17 | |
| | |
| T | Transportrichtung |
| Z | Abzugsrichtung |
| | |

## Patentansprüche

1. Streckvorrichtung zum Verstrecken einer Kunststofffolie in ihrer Transportrichtung mit einer ersten Walze, welche mit einem ersten Antrieb antreibbar und mit einer ersten Rotationsgeschwindigkeit rotierbar ist, und mit einer zweiten Walze, welche mit einem zweiten Antrieb antreibbar und mit einer zweiten Rotationsgeschwindigkeit rotierbar ist, wobei die zweite Rotationsgeschwindigkeit größer als die erste Rotationsgeschwindigkeit ist, wobei im Transportweg der Kunststofffolie die zweite Walze stromabwärts der ersten Walze angeordnet ist,
wobei mindestens eine der Walzen eine von außen nach innen luftdurchströmbare Walze ist,
**dadurch gekennzeichnet,**
**dass** die mindestens eine luftdurchströmbare Walze kontinuierlich abreinigbar ist.

2. Streckvorrichtung nach Anspruch 1,
**dadurch gekennzeichnet,**
**dass** Durchgangsöffnungen in dem Walzenmantel der mindestens einen luftdurchströmbaren Walze vorgesehen sind, wobei die Durchgangsöffnungen eine fluidkommunizierende Verbindung zwischen der Außenoberfläche und mindestens einem Hohlraum innerhalb der Walze darstellen.

3. Streckvorrichtung nach einem der vorstehenden Ansprüche,
**dadurch gekennzeichnet,**
**dass** die Durchgangsöffnungen in dem Walzenmantel zumindest jeweils teilweise durch Bohrungen und/oder poröses Material, aus welchem der Walzenmantel zumindest teilweise besteht, gebildet sind.

4. Streckvorrichtung nach einem der vorstehenden Ansprüche,
**dadurch gekennzeichnet,**
**dass** nur ein Teil der luftdurchströmbaren Walze von außen nach innen mit Luft durchströmbar ist, während ein anderer Teil von innen nach außen mit Luft durchströmbar ist.

5. Streckvorrichtung nach Anspruch 4,
**dadurch gekennzeichnet,**
**dass** einerseits Mittel zur Erzeugung eines Vakuums vorgesehen sind, über die die luftdurchströmbare Walze in dem Bereich, in dem sie von der Folie umschlungen wird, zumindest teilweise von außen nach innen von Luft durchströmbar ist, und dass andererseits Mittel zur Erzeugung eines Überdrucks vorgesehen sind, über die außerhalb des Umschlingungsbereichs der Folie zumindest in Teilbereichen Luft von innen nach außen durch die Durchgangsbohrungen zu deren Reinigung blasbar ist.

6. Streckvorrichtung nach einem der vorstehenden Ansprüche,
**dadurch gekennzeichnet,**
**dass** die luftdurchströmbare Walze wenigstens einen Hohlraum in Form einer Kammer umfasst, welcher in axialer Richtung und/oder in Umfangsrichtung mit zumindest einem Trennelement in zumindest zwei Segmente unterteilt ist, wobei zumindest jeweils ein Segment mit einem gegenüber dem Umgebungsdruck verringertem oder erhöhtem Luftdruck beaufschlagbar ist.

7. Streckvorrichtung nach einem der vorstehenden Ansprüche,
**dadurch gekennzeichnet,**
**dass** Heizmittel vorgesehen sind, über die zumindest ein Teil der durch die Durchgangsöffnungen der luftdurchströmbaren Walze hindurchströmende Luft auf eine soweit erhöhte Temperatur erhitzbar ist, dass in den Durchgangsöffnungen angesetzte Kunststoffreste, beispielsweise Paraffine, aufgeschmolzen und ausgeblasen und/oder abgesogen werden können.

8. Streckvorrichtung nach einem der vorstehenden Ansprüche,
**dadurch gekennzeichnet,**
**dass** in der luftdurchströmbaren Walze mindestens eine segmentierte Kammer angeordnet ist, über die in dieser aufgenommenes Lösungsmittel durch die Durchgangsöffnungen zu deren Reinigung drückbar ist.

9. Streckvorrichtung nach einem der vorstehenden Ansprüche,
**dadurch gekennzeichnet,**
**dass** außen in dem Bereich der Oberfläche der luftdurchströmbaren Walze, der nicht von der Folie umschlungen ist, wenigstens ein Brenner zum Wegbrennen von Kunststoffresten oder Mittel zur Erzeugung eines Ionenstrahls oder Mittel zur Erzeugung einer Corona zur Beseitigung der Kunststoffreste angeordnet sind.

10. Streckvorrichtung nach einem der vorstehenden Ansprüche,
**dadurch gekennzeichnet,**
**dass** außen in dem Bereich der Oberfläche der luftdurchströmbaren Walze, der nicht von der Folie umschlungen ist, wenigstens eine Saugeinrichtung zum Anlegen eines Unterdrucks an die Oberfläche angeordnet ist.

11. Streckvorrichtung nach einem der vorstehenden Ansprüche,
**dadurch gekennzeichnet,**
**dass** außen in dem Bereich der Oberfläche der luftdurchströmbaren Walze, der nicht von der Folie umschlungen ist, wenigstens eine Rakel zum Abrakeln fester Stoffe von der Oberfläche angeordnet ist.

12. Verfahren zum Verstrecken einer Kunststofffolie in ihrer Transportrichtung mit einer ersten Walze, welche mit einem ersten Antrieb angetrieben und mit einer ersten Rotationsgeschwindigkeit rotiert wird, und mit einer zweiten Walze, welche mit einem zweiten Antrieb angetrieben und mit einer zweiten Rotationsgeschwindigkeit rotiert wird, wobei die zweite Rotationsgeschwindigkeit größer als die erste Rotationsgeschwindigkeit ist, wobei im Transportweg der Kunststofffolie die zweite Walze stromabwärts der ersten Walze angeordnet ist, wobei mindestens eine der Walzen eine von außen nach innen mit Luft durchströmt wird,
**dadurch gekennzeichnet,**
**dass** die mindestens eine luftdurchströmbare Walze kontinuierlich abgereinigt wird.

13. Blasfolienanlage mit zumindest einem Extruder zur Erzeugung einer Kunststoffschmelze, einem Düsenkopf zur Erzeugung eines Folienschlauches, einer Flachlegeeinrichtung zur Umwandlung des Folienschlauches in eine doppellagige Kunststofffolie, einer angetriebenen Abzugsvorrichtung zum Abziehen und Weitertransport der doppellagigen Kunststofffolie und einer Wickeleinrichtung zum Aufwickeln zumindest einer Lage der doppellagigen Kunststofffolie, **gekennzeichnet durch**
wenigstens eine Streckvorrichtung nach einem der Ansprüche 1 bis 11.
